# EUROPEAN PATENT APPLICATION

(11) **EP 4 794 318 A1**
(43) Date of publication of application: **19.08.2026**
(21) Application number: 25197791.4
(22) Date of filing: 25.08.2025
(51) Int. Cl.: H04N 1/00, H04N 1/23, G03G 15/00

(54) **INFORMATION PROCESSING SYSTEM AND REGISTRATION METHOD**

(30) Priority: 18.02.2025 JP 2025024507; 25.03.2025 JP 2025050661
(71) Applicant: FUJIFILM Business Innovation Corp., Minato-ku Tokyo (JP)
(72) Inventor: MATSUO, Kota, Yokohama-shi, Kanagawa (JP); MATSUGUMA, Chihiro, Yokohama-shi, Kanagawa (JP); SAKAMOTO, Masaomi, Yokohama-shi, Kanagawa (JP); HORIKAWA, Kazuhiko, Yokohama-shi, Kanagawa (JP); YOKOHASHI, Mami, Yokohama-shi, Kanagawa (JP)
(74) Representative: Becker Kurig & Partner Patentanwälte mbB

(57) **Abstract**

An information processing system includes a processor configured to perform, in registering a recording medium in a medium information group that is a set of medium information in which a characteristic of the recording medium and image forming control information for controlling image forming on the recording medium are associated with each other, a control of acquiring measurement information that is information related to a measured physical property of the recording medium, a control of displaying a matching registration candidate based on the acquired measurement information, and a control of displaying, in displaying two or more registration candidates, a screen on which test printing of at least one of the two or more registration candidates is executable.

## Description

### BACKGROUND OF THE INVENTION

### (i) Field of the Invention

The present invention relates to an information processing system and a registration method.

### (ii) Description of Related Art

JP2016-71169A discloses an image forming apparatus that acquires feature information of a recording medium from the recording medium, determines a candidate of matching recording medium information, and in a case where candidates of two or more pieces of the recording medium information are determined, receives selection of one of the pieces of recording medium information and stores the selected recording medium information.

### SUMMARY OF THE INVENTION

For example, the image forming apparatus has a function of storing and managing a medium information group that is a set of a characteristic of the recording medium and image forming control information. In newly registering the recording medium in the medium information group, or correcting characteristic information of a registered medium and re-registering the medium, a plurality of registration candidates presented on an apparatus side from physical characteristic information of the medium may be present. In a case where one of the plurality of candidates is selected and registered in the medium information group, an intended image forming output may not be obtained in performing image forming in a subsequent step based on information registered in the medium information group.

An object of the present invention is to provide a function of selecting an appropriate registration candidate in a case where a plurality of registration candidates for a medium information group are present.

According to a first aspect of the present disclosure, there is provided an information processing system including a processor configured to perform, in registering a recording medium in a medium information group that is a set of medium information in which a characteristic of the recording medium and image forming control information for controlling image forming on the recording medium are associated with each other, a control of acquiring measurement information that is information related to a measured physical property of the recording medium, a control of displaying a matching registration candidate based on the acquired measurement information, and a control of displaying, in displaying two or more registration candidates, a screen on which test printing of at least one of the two or more registration candidates is executable.

According to a second aspect of the present disclosure, in the information processing system according to the first aspect, the registration candidate may be a candidate of the characteristic of the recording medium.

According to a third aspect of the present disclosure, in the information processing system according to the second aspect, the processor may be configured to perform a control of selecting a matching characteristic of the recording medium based on the measurement information, and a control of displaying, in a case where a plurality of matching characteristics of the recording medium are present, the plurality of characteristics of the recording medium as the registration candidates.

According to a fourth aspect of the present disclosure, in the information processing system according to the first aspect, the registration candidate may be a candidate of the image forming control information.

According to a fifth aspect of the present disclosure, in the information processing system according to the fourth aspect, the processor may be configured to perform a control of displaying, in a case where the measurement information is different from past measurement information of the recording medium of which the characteristic is identical, a plurality of candidates of the image forming control information.

According to a sixth aspect of the present disclosure, there is provided a registration method including, in registering a recording medium in a medium information group that is a set of medium information in which a characteristic of the recording medium and image forming control information for controlling image forming on the recording medium are associated with each other, acquiring measurement information that is information related to a measured physical property of the recording medium, displaying a matching registration candidate based on the acquired measurement information, and displaying, in displaying two or more registration candidates, a screen on which test printing of at least one of the two or more registration candidates is executable.

According to the first and sixth aspects of the present disclosure, a function of selecting an appropriate registration candidate in a case where a plurality of registration candidates for the medium information group are present can be provided.

According to the second aspect of the present disclosure, a function of selecting an appropriate registration candidate in a case where a plurality of registration candidates of the characteristic of the recording medium for the medium information group are present can be provided.

According to the third aspect of the present disclosure, a function of selecting an appropriate registration candidate even in a case where a plurality of candidates of the characteristic of the recording medium selected based on the measurement information are present can be provided.

According to the fourth aspect of the present disclosure, a function of selecting an appropriate registration candidate in a case where a plurality of registration candidates of the image forming control information for the medium information group are present can be provided.

According to the fifth aspect of the present disclosure, a function of selecting an appropriate registration candidate even in a case where the characteristic of the recording medium is identical can be provided.

### BRIEF DESCRIPTION OF THE DRAWINGS

Exemplary embodiment(s) of the present invention will be described in detail based on the following figures, wherein:
FIG. 1 is a diagram for describing an information processing system to which the present exemplary embodiment is applied;
FIG. 2 is a block diagram illustrating an example of a hardware configuration of a control unit of an image forming apparatus and an example of a hardware configuration of a server apparatus;
FIG. 3 is a block diagram illustrating an example of a hardware configuration of a medium measuring device;
FIG. 4 is a block diagram illustrating an example of a functional configuration of the server apparatus;
FIG. 5 is a diagram for describing an example of a flow of calculating a characteristic of a recording medium and an image forming parameter from measurement values measured by a sensor unit and an environment sensor;
FIG. 6 is a diagram illustrating an example of a relationship between paper sheet A and paper sheet B registered in advance in a medium information group and measurement values of parameter 1 and parameter 2;
FIG. 7 is a diagram illustrating an example of a matching ratio of the calculated characteristic of the recording medium;
FIG. 8 is a diagram illustrating an example of a result screen showing a measurement result of the medium measuring device;
FIG. 9 is a diagram illustrating an example of a print check screen showing a print setting to be checked; and
FIG. 10 is a diagram illustrating an example of a flow of processing of registering medium information in the medium information group.

### DETAILED DESCRIPTION OF THE INVENTION

Hereinafter, an exemplary embodiment of the present invention will be described in detail with reference to the accompanying drawings.

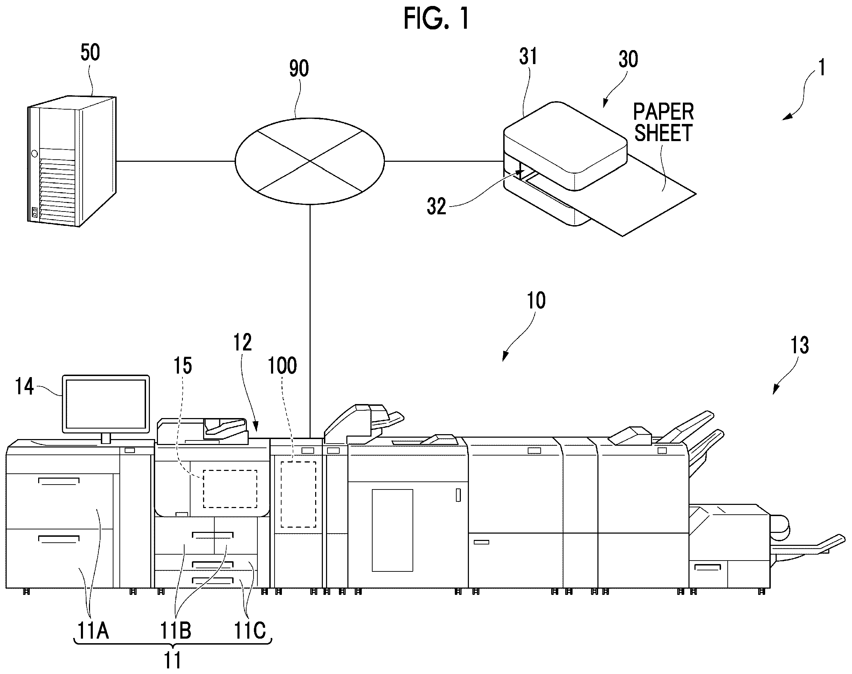

FIG. 1 is a diagram for describing an information processing system 1 to which the present exemplary embodiment is applied.

The information processing system 1 according to the present exemplary embodiment includes an image forming apparatus 10, a medium measuring device 30, and a server apparatus 50. The image forming apparatus 10, the medium measuring device 30, and the server apparatus 50 are connected via a network 90.

The image forming apparatus 10 is, for example, a so-called production printer used for image forming for office use. The production printer has a function of executing highspeed image forming processing with high image quality, compared to a printer for home use. The image forming apparatus 10 is not limited to the production printer and may be a printer for business use, a printer for home use, or the like.

The image forming apparatus 10 includes a feeding unit 11, an image forming unit 12, a post-processing unit 13, a display and operation unit 14, and an environment sensor 15. The image forming apparatus 10 includes a control unit 100 that controls the whole image forming apparatus 10.

The feeding unit 11 feeds a recording medium on which image forming is performed. The feeding unit 11 includes a plurality of feeding trays 11A, 11B, and 11C for accommodating each type of recording media to be fed. In the example illustrated in FIG. 1, the feeding unit 11 includes two feeding trays 11A, two feeding trays 11B, and two feeding trays 11C. Each of the feeding trays 11A to 11C can feed recording media having different sizes or the same size.

The image forming unit 12 may use not only an electrophotographic method of fixing and forming an image by transferring toner clinging to a charged and exposed photoconductor to a recording medium but also, for example, an ink jet method of forming an image by ejecting ink onto a recording medium.

The post-processing unit 13 performs various types of post-processing on the recording medium on which the image forming is performed by the image forming unit 12. The post-processing unit 13 is provided with, for example, processing of discharging image-formed matters of the same page as a unit by changing positions (that is, stack processing), staple processing of stapling a plurality of sheets of recording media, and processing of binding a plurality of sheets of recording media with an adhesive tape.

The display and operation unit 14 is an interface that displays various images for operation and various types of information for notifying a user and receives operations of the user. The display and operation unit 14 includes, for example, an input unit such as a button for operation or a touch sensor that detects an operation performed with a fingertip of the user, and a display unit such as a liquid crystal display or an organic electro-luminescent (EL) display.

The environment sensor 15 measures a state of an environment in which the image forming apparatus 10 is installed. The environment sensor 15 includes, for example, a thermometer and a hygrometer. In the example illustrated in FIG. 1, the environment sensor 15 is disposed inside the image forming apparatus 10 and is disposed near the feeding unit 11. The environment sensor 15 may be disposed outside the image forming apparatus 10.

The medium measuring device 30 is a device that measures a recording medium. The medium measuring device 30 includes a housing 31 including a sensor for measuring the recording medium, and a gap 32 for inserting the recording medium, and is configured to be compact and incorporate a box. The medium measuring device 30 may be provided inside the image forming apparatus 10. For example, the sensor for measuring the recording medium may be provided on a transport path for transporting the recording medium in the image forming apparatus 10 and measure the recording medium while the recording medium is transported. Alternatively, for example, sensors may be provided in the feeding trays 11A to 11C of the image forming apparatus 10, and the recording media accommodated in the feeding trays may be measured.

The server apparatus 50 functions as a database that stores a plurality of pieces of medium information. In the medium information, a characteristic of the recording medium and an image forming parameter for performing the image forming are stored in association with each other. The image forming parameter is an example of image forming control information.

Here, the medium information is information in which the characteristic of the recording medium and the image forming parameter for controlling the image forming on the recording medium are stored in association with each other. The user instructs the image forming apparatus 10 to perform the image forming on the recording medium using the medium information.

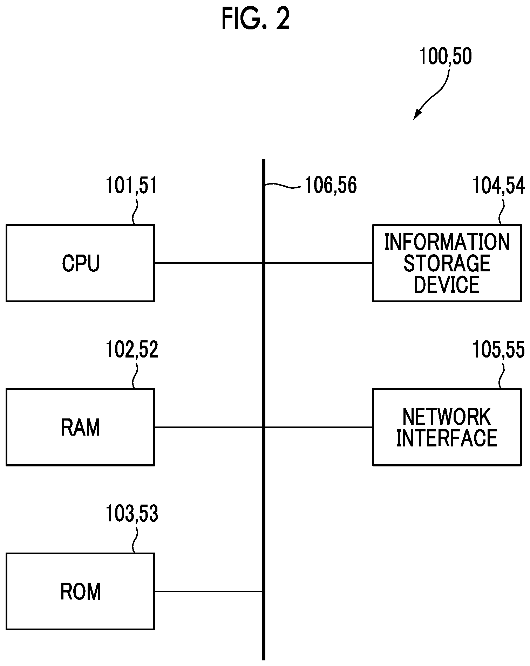

FIG. 2 is a block diagram illustrating an example of a hardware configuration of the control unit 100 of the image forming apparatus 10 and an example of a hardware configuration of the server apparatus 50.

The control unit 100 of the image forming apparatus 10 includes a central processing unit (CPU) 101, a random access memory (RAM) 102, a read only memory (ROM) 103, an information storage device 104, a network interface 105, and a signal line 106.

The CPU 101 controls the whole image forming apparatus 10 as an example of a processor. In a case where a control program is executed by the CPU 101, each functional unit of the image forming apparatus 10 is controlled. The RAM 102 is used as a work area in a case where the CPU 101 performs calculation. The ROM 103 is a memory in which various programs and the like executed by the CPU 101 are recorded. The information storage device 104 stores various settings used for controlling the image forming apparatus 10, image information used for the image forming, and the like. A hard disk drive (HDD), a semiconductor memory, or the like can be used as the information storage device 104. The network interface 105 transmits and receives data via the network 90 (see FIG. 1). Each unit of the control unit 100 is connected via a bus or the signal line 106.

As a hardware configuration of the server apparatus 50, for example, the same hardware configuration as the control unit 100 of the image forming apparatus 10 can be used. The server apparatus 50 includes a CPU 51, a RAM 52, a ROM 53, an information storage device 54, a network interface 55, and a signal line 56. The CPU 51 controls the server apparatus 50 as an example of a processor. In a case where a control program is executed by the CPU 51, each functional unit of the server apparatus 50 is controlled. The RAM 52 is used as a work area in a case where the CPU 51 performs calculation. The ROM 53 is a memory in which various programs and the like executed by the CPU 51 are recorded.

The information storage device 54 stores a trained machine learning model used for information processing via the server apparatus 50, various settings used for calculation control, the medium information, and the like. A hard disk drive (HDD), a semiconductor memory, or the like can be used as the information storage device 54. The information storage device 54 stores, for example, the medium information.

The network interface 55 transmits and receives data to and from the image forming apparatus 10 and the medium measuring device 30 via the network 90 (see FIG. 1).

Each unit of the server apparatus 50 is connected via a bus or the signal line 56.

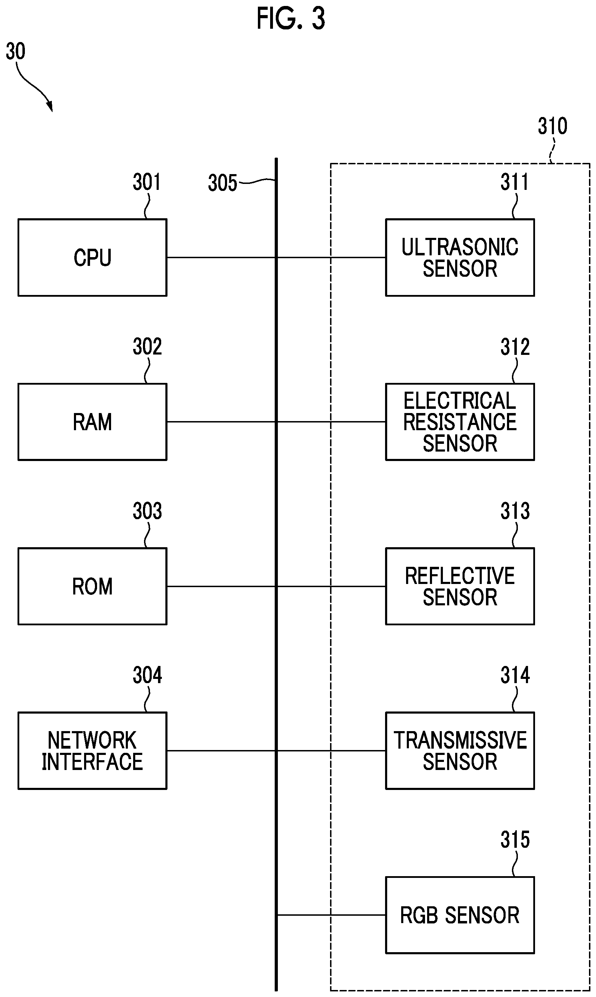

FIG. 3 is a block diagram illustrating an example of a hardware configuration of the medium measuring device 30.

The medium measuring device 30 includes a CPU 301, a RAM 302, a ROM 303, a network interface 304, a bus 305, and a sensor unit 310.

The CPU 301 controls the whole medium measuring device 30 as an example of a processor. In a case where a control program is executed by the CPU 301, each functional unit of the medium measuring device 30 is controlled. The RAM 302 is used as a work area in a case where the CPU 301 performs calculation. The ROM 303 is a memory in which various programs and the like executed by the CPU 301 are recorded.

The network interface 304 transmits measurement values measured by various sensors of the sensor unit 310 (described later) to the server apparatus 50 (see FIG. 1) via the network 90 (see FIG. 1).

The sensor unit 310 includes a sensor that measures a physical property of the recording medium. Types and the number of sensors included in the sensor unit 310 are not particularly limited. In the illustrated example, the sensor unit 310 includes an ultrasonic sensor 311, an electrical resistance sensor 312, a reflective sensor 313, a transmissive sensor 314, and an RGB sensor 315.

The ultrasonic sensor 311 generates an ultrasonic wave having a predetermined intensity from one side of the recording medium in a thickness direction to the recording medium, and measures the intensity of the ultrasonic wave on the other side of the recording medium in the thickness direction.

The electrical resistance sensor 312 measures electrical resistance of the recording medium by causing a microcurrent to flow through the recording medium. The electrical resistance sensor 312, for example, measures volume resistance as the electrical resistance of the recording medium in the thickness direction by causing the microcurrent to flow in the thickness direction of the recording medium. Alternatively, for example, the electrical resistance sensor 312 may measure surface resistance as the electrical resistance in a direction along a surface of the recording medium by causing the microcurrent to flow in the direction along the surface of the recording medium.

The reflective sensor 313 measures reflected light of the recording medium. More specifically, intensities of specularly reflected light and diffusely reflected light on the surface of the recording medium are measured. The transmissive sensor 314 measures an intensity of transmitted light of the recording medium. The RGB sensor 315 measures the intensity of the reflected light from the recording medium for each of red (R), green (G), and blue (B). Measurement values that are measurement results of these sensors are examples of information related to the physical property of the recording medium. The information related to the physical property of the recording medium may include, in addition to the measurement values, information on the physical property of the recording medium calculated from the measurement values. For example, in the present exemplary embodiment, the measurement value of the ultrasonic sensor 311 is converted into a basis weight of the recording medium by a basis weight conversion unit 521 of the server apparatus 50 (described later). However, the medium measuring device 30 may calculate the basis weight of the recording medium from the measurement value of the ultrasonic sensor 311. The basis weight of the recording medium is an example of the physical property of the recording medium. That is, examples of the information related to the physical property of the recording medium include an electrical characteristic such as the electrical resistance of the recording medium, a physical characteristic such as the basis weight, and other characteristics such as the reflected light, the transmitted light, and color.

The medium measuring device 30 outputs values obtained by measuring the physical property of the recording medium via each sensor of the sensor unit 310 to the server apparatus 50 (see FIG. 1) as the measurement values. For example, in a case where the electrical resistance of the recording medium is measured, a value in Ω units is output to the server apparatus 50 as the measurement value.

### <Functional Configuration of Server Apparatus 50>

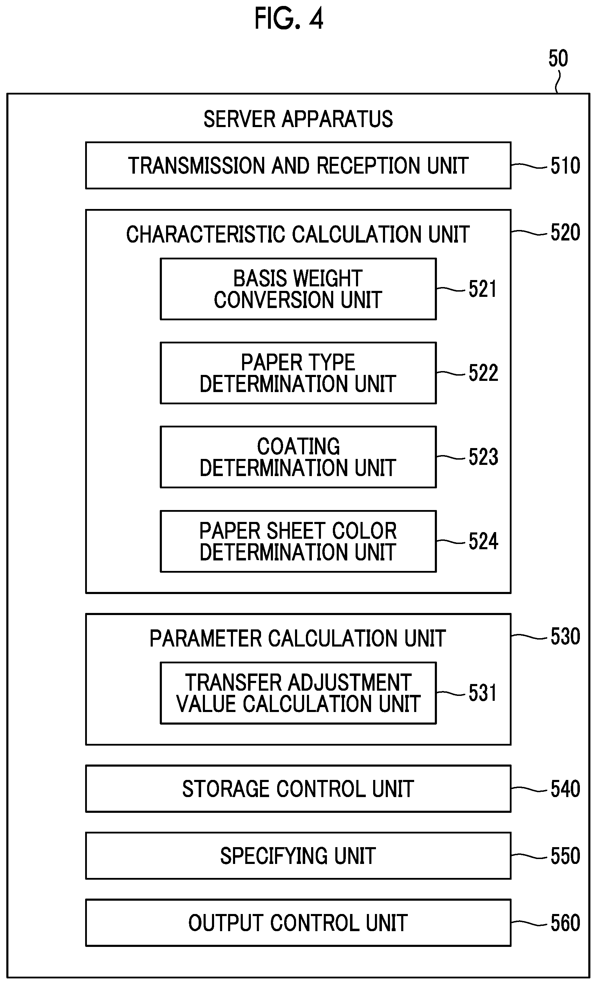

FIG. 4 is a block diagram illustrating an example of a functional configuration of the server apparatus 50.

The server apparatus 50 includes a transmission and reception unit 510, a characteristic calculation unit 520, a parameter calculation unit 530, a storage control unit 540, a specifying unit 550, and an output control unit 560.

The transmission and reception unit 510 is connected to the image forming apparatus 10 (see FIG. 1) and the medium measuring device 30 (see FIG. 1) using the network interface 55 (see FIG. 2) and transmits and receives various types of information. The transmission and reception unit 510 receives the measurement values measured by the sensor unit 310 (see FIG. 3) of the medium measuring device 30 from the medium measuring device 30. The transmission and reception unit 510 receives an instruction of the user from the image forming apparatus 10 and transmits various types of information corresponding to the instruction of the user to the image forming apparatus 10. The transmission and reception unit 510 transmits information to be displayed on the display and operation unit 14 (see FIG. 1) to the image forming apparatus 10.

The characteristic calculation unit 520 calculates the characteristic of the recording medium using the information related to the physical property of the recording medium. In the present exemplary embodiment, the characteristic calculation unit 520 calculates characteristic information related to the characteristic of the recording medium using the measurement values acquired by receiving the measurement values from the medium measuring device 30. In the present exemplary embodiment, the characteristic information of the recording medium is calculated using a measurement value of the environment sensor 15 of the image forming apparatus 10, in addition to the measurement values acquired from the medium measuring device 30. A source from which the information related to the physical property of the recording medium used for calculating the characteristic of the recording medium via the characteristic calculation unit 520 is acquired is not particularly limited, and the information related to the physical property of the recording medium may be acquired from a database in which the information related to the physical property of the recording medium is stored. For example, the information related to the physical property of the recording medium may be stored in advance in association with a product name, a product number, and the like of the recording medium. In this case, the characteristic of the recording medium may be calculated using the information related to the physical property of the recording medium associated with the product name, the product number, and the like of the recording medium. Alternatively, for example, the measurement values may be acquired from a history of past measurement performed by the medium measuring device 30, and the characteristic of the recording medium may be calculated using the past measurement values of the medium measuring device 30 and the current measurement value of the environment sensor 15.

Here, the characteristic information is information on the characteristic of the recording medium derived from the physical property of the recording medium. Examples of the characteristic information include a type of the recording medium, whether or not the recording medium is coated, the basis weight of the recording medium, and the color of the paper sheet. The type of the recording medium is a category in which the recording media are divided by a material, such as plain paper, embossed paper, and a film. Examples of the type of the recording medium include plain paper, coated paper obtained by coating a surface of plain paper with a resin or the like, thick paper having a larger basis weight than plain paper, thin paper having a smaller basis weight than plain paper, and an OHP film. For example, in a case where a plurality of candidates are calculated as the type of the recording medium, the plurality of calculated candidates are selected as candidates of the characteristic of the recording medium.

The characteristic calculation unit 520 includes the basis weight conversion unit 521, a paper type determination unit 522, a coating determination unit 523, and a paper sheet color determination unit 524.

The basis weight conversion unit 521 converts the basis weight using the measurement value of the ultrasonic sensor 311. The paper type determination unit 522 estimates light transmittance of the recording medium using at least the measurement value of the transmissive sensor 314 and, for example, distinguishes between embossed paper and plain paper. The paper type determination unit 522 may further perform determination related to a paper type using the measurement values of the sensors other than the transmissive sensor 314. The coating determination unit 523, for example, determines presence or absence of a coating from the intensities of the specularly reflected light and the diffusely reflected light on the surface of the recording medium using at least the measurement value of the reflective sensor 313. The coating determination unit 523 may further perform determination related to the coating using the measurement values of the sensors other than the reflective sensor 313. For example, a type of coating such as a matte coating or a cast coating may be determined. The paper sheet color determination unit 524 determines a paper sheet color (the color of the recording medium) using the measurement value of the RGB sensor 315.

The parameter calculation unit 530 calculates the image forming parameter using the measurement values acquired from the medium measuring device 30. The parameter calculation unit 530 includes a transfer adjustment value calculation unit 531. The transfer adjustment value calculation unit 531 calculates a transfer voltage using at least the measurement value of the electrical resistance of the recording medium acquired from the medium measuring device 30. In calculating the transfer voltage, the transfer adjustment value calculation unit 531 may further use other measurement values for the calculation. The image forming parameter calculated by the parameter calculation unit 530 is not limited to the transfer voltage. For example, a fixing temperature setting value for fixing a coloring material image to the recording medium, a transfer output, a fixing drying temperature, and the like may be calculated. For example, in a case where a plurality of candidates are calculated as the image forming parameter, the plurality of calculated candidates are selected as candidates of the image forming parameter.

The storage control unit 540 adds the medium information to the medium information group in which the medium information is collected, or changes content of the medium information included in the medium information group. In the present exemplary embodiment, the medium information group is stored in the information storage device 54 of the server apparatus 50. In the medium information, "name" for identifying the medium information, the "characteristic of the recording medium", and the "image forming parameter" created to obtain image forming quality intended by the user are stored in association with each other. Examples of the "image forming parameter" include an alignment roll load, a transfer nip load, the transfer output, the fixing drying temperature, a fixing nip temperature, air assist for the paper sheet trays, registration/alignment adjustment, curl correction, and a print speed. The medium information may include a comment or the like input by the user.

The specifying unit 550 specifies a registration candidate matching the recording medium from the medium information created by measuring the recording medium via the medium measuring device 30.

More specifically, the medium measuring device 30 measures a new recording medium, and a matching ratio between the new recording medium and the medium information registered in the medium information group is calculated using the characteristic information calculated by the characteristic calculation unit 520 and the image forming parameter calculated by the parameter calculation unit 530. Medium information having a high matching ratio is specified as the registration candidate. Here, in a case where a plurality of pieces of medium information having a high matching ratio are present, a plurality of medium information groups are specified as registration candidates. The specified medium information group is displayed on the display and operation unit 14 (see FIG. 1).

In comparing the characteristic information of the new recording medium measured by the medium measuring device 30 with the image forming parameter, all pieces of the calculated characteristic information and all calculated image forming parameters may be used for the comparison. In comparing the characteristic information of the new recording medium measured by the medium measuring device 30 with the image forming parameter, a part of the calculated characteristic information and a part of the image forming parameters may be used for the comparison. In comparing the characteristic information of the new recording medium measured by the medium measuring device 30 with the image forming parameter, the comparison may be performed with only the calculated characteristic information, or the comparison may be performed with only the calculated image forming parameter. An item of which a value is frequently changed depending on the preference of the user may not be used as an item to be compared. For example, in a case where a search is performed using an item of which a numerical value is frequently changed depending on the preference of the user, a search result appropriate for other users may not be obtained. That is, a parameter value to be used for the comparison and a parameter value not to be used for the comparison may be determined in advance among the image forming parameters. In performing the comparison, the comparison may be performed using not only the calculated characteristic information and the calculated image forming parameter but also the measurement values used for the calculation.

The output control unit 560 controls information to be displayed on the display and operation unit 14 (see FIG. 1). The output control unit 560 displays the medium information specified as having a matching ratio by the specifying unit 550 on the display and operation unit 14 as the registration candidate. For example, the output control unit 560 displays a plurality of candidates of the characteristic of the recording medium on the display and operation unit 14. Even in a case where the characteristic of the recording medium is identical, a plurality of candidates of the image forming parameter may be displayed.

The output control unit 560 displays a display for providing the user with a test printing function on the display and operation unit 14. The user performs test printing in accordance with the display on the display and operation unit 14 and selects the medium information to be registered from the plurality of displayed candidates. The registration performed here may be re-registration of the recording medium that is already registered.

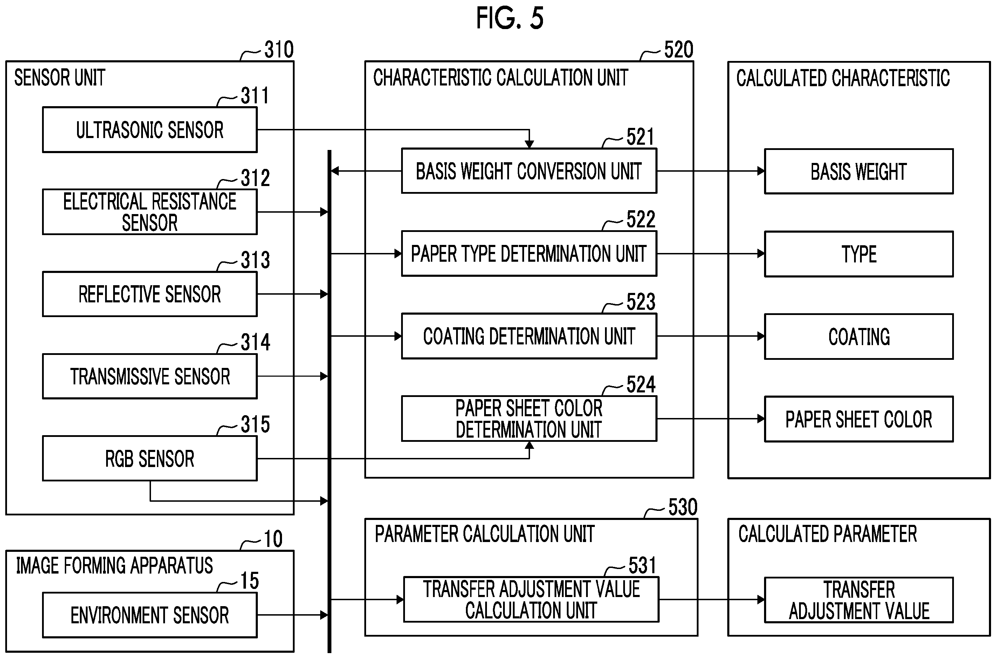

FIG. 5 is a diagram for describing an example of a flow of calculating the characteristic of the recording medium and the image forming parameter from the measurement values measured by the sensor unit 310 and the environment sensor 15.

As illustrated, the basis weight conversion unit 521 converts the measurement value of the ultrasonic sensor 311 into a basis weight. The basis weight converted by the basis weight conversion unit 521 is output as a characteristic value and is used as input values of the characteristic calculation unit 520 and the parameter calculation unit 530.

The paper type determination unit 522 receives input of the basis weight converted by the basis weight conversion unit 521, the measurement value of the electrical resistance sensor 312, the measurement value of the reflective sensor 313, the measurement value of the transmissive sensor 314, the measurement value of the RGB sensor 315, and the measurement value of the environment sensor 15. The paper type determination unit 522 outputs the type of the recording medium from the input values.

The coating determination unit 523 receives input of the basis weight converted by the basis weight conversion unit 521, the measurement value of the electrical resistance sensor 312, the measurement value of the reflective sensor 313, the measurement value of the transmissive sensor 314, the measurement value of the RGB sensor 315, and the measurement value of the environment sensor 15. The coating determination unit 523 determines and outputs the presence or absence of the coating from the input values.

The paper sheet color determination unit 524 receives input of the value of the RGB sensor 315 and outputs the paper sheet color.

The transfer adjustment value calculation unit 531 receives input of the basis weight converted by the basis weight conversion unit 521, the measurement value of the electrical resistance sensor 312, the measurement value of the reflective sensor 313, the measurement value of the transmissive sensor 314, the measurement value of the RGB sensor 315, and the measurement value of the environment sensor 15. The transfer adjustment value calculation unit 531 outputs a transfer adjustment value using the input basis weight and the input measurement values.

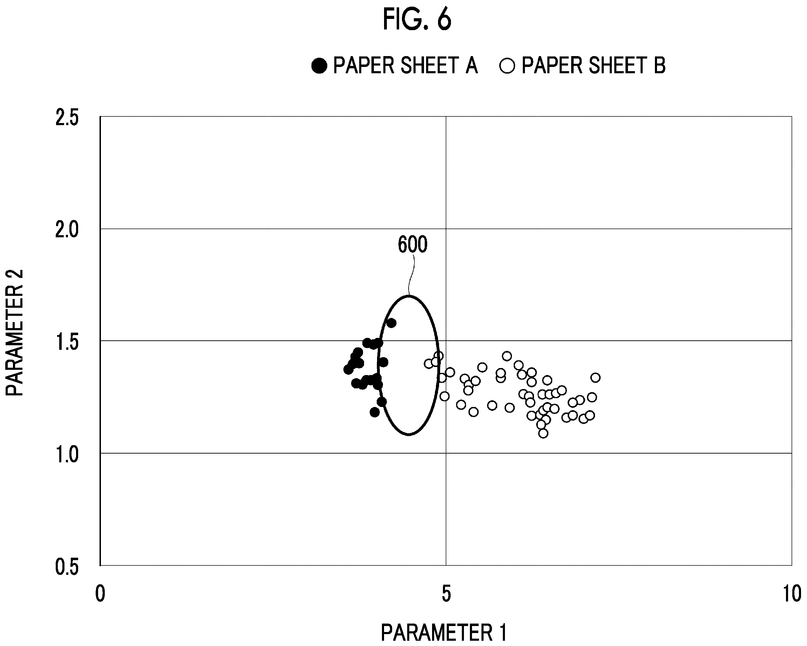

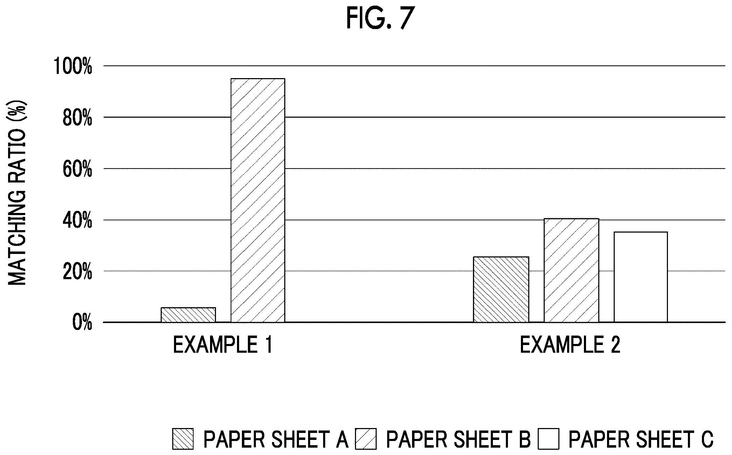

An example of a method of specifying the characteristic of the recording medium will be described with reference to FIGS. 6 and 7.

FIG. 6 is a diagram illustrating an example of a relationship between paper sheet A and paper sheet B registered in advance in the medium information group and measurement values of parameter 1 and parameter 2. For simplification, FIG. 6 illustrates an example of specifying the characteristic of the recording medium from two parameters. In FIG. 6, the horizontal axis denotes parameter 1, and the vertical axis denotes parameter 2. Parameter 1 and parameter 2 are physical properties of the recording medium measured by the medium measuring device 30. In FIG. 6, paper sheet A and paper sheet B are illustrated as examples of the specified characteristic of the recording medium. As illustrated in FIG. 6, physical property values of each of paper sheet A and paper sheet B are scattered in separate regions.

Three or more physical properties of the recording medium may be used for specifying the characteristic of the recording medium via the specifying unit 550.

The characteristic calculation unit 520 specifies whether the recording medium is paper sheet A or paper sheet B from parameter 1 and parameter 2. For example, the characteristic of the recording medium is specified through analysis processing using an artificial intelligence (AI). Here, the measurement values of the recording medium measured by the medium measuring device 30 may be included in a boundary region 600 illustrated in FIG. 6. The boundary region 600 is a region showing a feature matching both of paper sheet A and paper sheet B. In this case, specifying whether the recording medium is paper sheet A or paper sheet B is not easy. In such a case, both of paper sheet A and paper sheet B are selected as candidates of the characteristic of the recording medium.

FIG. 7 is a diagram illustrating an example of the matching ratio of the calculated characteristic of the recording medium. FIG. 7 illustrates the matching ratio of the characteristic of the recording medium for each of Example 1 and Example 2. In FIG. 7, the vertical axis denotes the matching ratio (%).

In Example 1, the matching ratio between the characteristic of the recording medium and paper sheet A is approximately 5%, and the matching ratio between the characteristic of the recording medium and paper sheet B is approximately 95%. In a case where matching ratios are greatly separated among the plurality of candidates, paper sheet B is selected as the characteristic of the recording medium.

In Example 2, all matching ratios between the characteristic of the recording medium and each paper sheet are ratios of 20% to 40% similar to each other. In a case where matching ratios are similar to each other among the plurality of candidates, all of paper sheet A, paper sheet B, and paper sheet C that are the plurality of candidates are selected as the characteristic of the recording medium.

For example, the processing of selecting the registration candidate from the plurality of matching candidates is performed through analysis processing using the AI. The processing of specifying the characteristic of the recording medium and the processing of selecting the registration candidate from the plurality of candidates may be executed using different AIs.

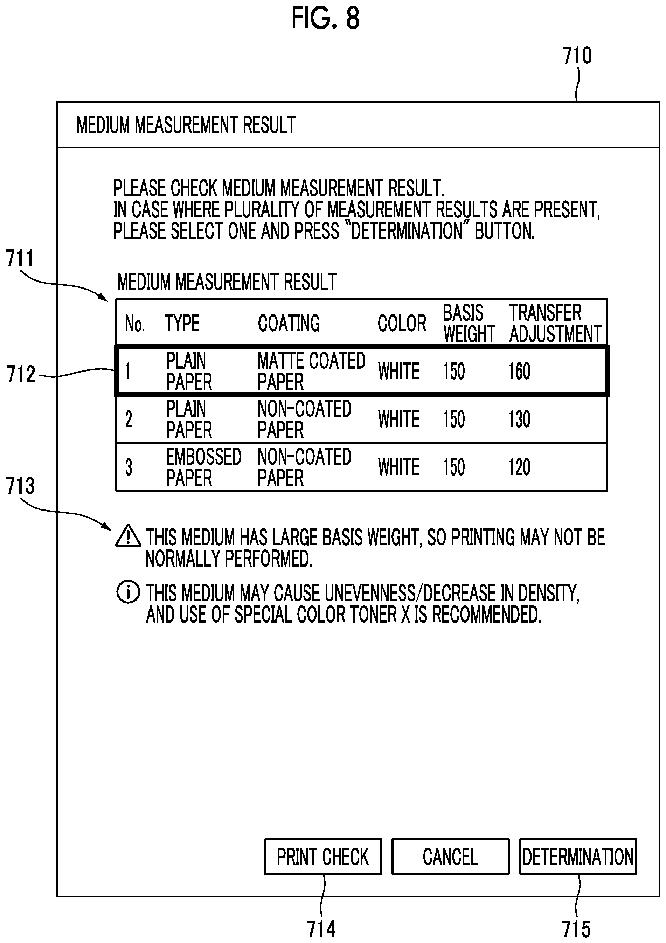

FIG. 8 is a diagram illustrating an example of a result screen 710 showing the measurement results of the medium measuring device 30.

The result screen 710 is displayed after the calculation of the characteristic information and the calculation of the image forming parameter by the medium measuring device 30 are completed. The result screen 710 displays the measurement results that are the medium information including the characteristic of the recording medium and the image forming parameter calculated using the measurement values provided by the medium measuring device 30. In the illustrated example, three measurement results are displayed in a measurement result display field 711. Each measurement result displays the characteristic of the recording medium and the image forming parameter in association with "No." indicating a number for distinguishing the result. In the illustrated example, "type", "coating", "color", and "basis weight" are displayed as the characteristic of the recording medium. In the illustrated example, "transfer adjustment" is displayed as the image forming parameter. Specifically, in the measurement result of which "No." is "1", "plain paper" is displayed as "type", "matte coated paper" is displayed as "coating", "white" is displayed as "color", "150" is displayed as "basis weight", and "160" is displayed as "transfer adjustment".

In the measurement result display field 711, a frame 712 indicating which measurement result is selected among the displayed measurement results is displayed. The user selects the measurement result by touching a region in which the measurement result is displayed. The frame 712 moves to surround the selected measurement result.

An item of the characteristic of the recording medium displayed in the measurement result display field 711 and an item of the image forming parameter to be displayed are not particularly limited, and other items may be displayed.

A supplement 713 is displayed in a center portion of the result screen 710. In the supplement 713, for example, information determined in advance based on the characteristic of the recording medium is displayed. For example, information for recommending a type of ink toner corresponding to the type of the recording medium is displayed. In addition, for example, whether or not the image forming can be performed in accordance with the basis weight of the recording medium is displayed. In the illustrated example, "This medium has a large basis weight, so printing may not be normally performed." and "This medium may cause unevenness/a decrease in density, and use of special color toner X is recommended." are displayed in the supplement 713.

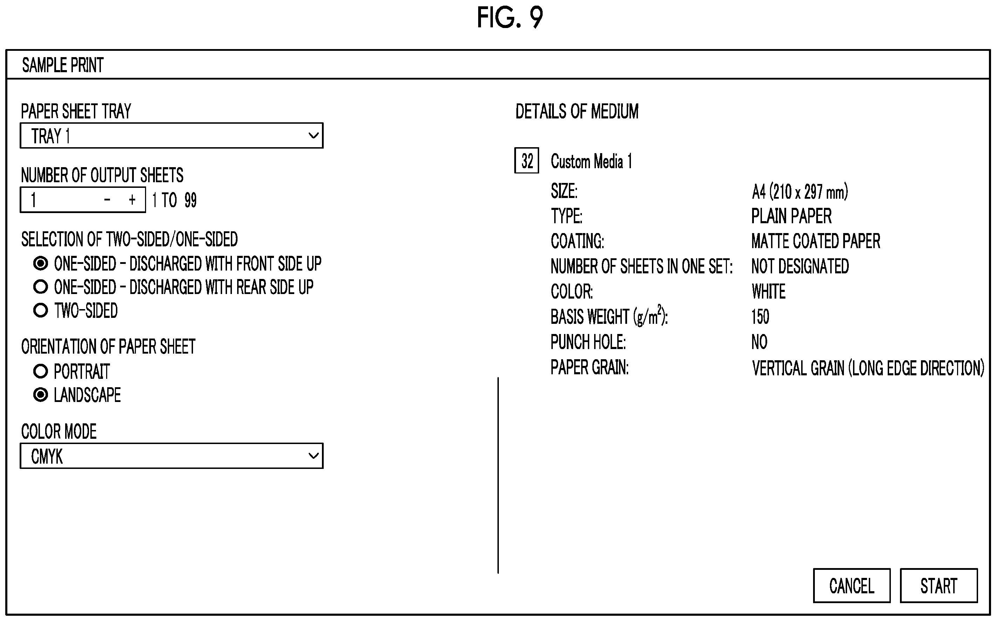

A print check button 714 for printing to be checked for the selected medium information is displayed in a lower portion of the result screen 710. In a case where the print check button 714 is pressed by the user, the display screen transitions to a print check screen 720 (see FIG. 9).

A determination button 715 for determining the selection of the measurement result is displayed in the lower portion of the result screen 710. In a case where the determination button 715 is pressed by the user, the selected measurement result is registered in the medium information group.

FIG. 9 is a diagram illustrating an example of the print check screen 720 showing a print setting to be checked. On the print check screen 720, the paper sheet tray, the number of output sheets, selection of two-sided/one-sided, an orientation of the paper sheet, a color mode, and the like are displayed as the print setting to be checked. The characteristic of the recording medium such as a size of the recording medium, the type (material) of the recording medium, the presence or absence of the coating, the number of sheets in one set, the color of the recording medium, the basis weight of the recording medium, presence or absence of a punch hole, and paper grain is displayed as details of the medium.

A start button 721 for starting a print check is displayed in a lower portion of the print check screen 720. In a case where the start button 721 is pressed by the user, the print check is started.

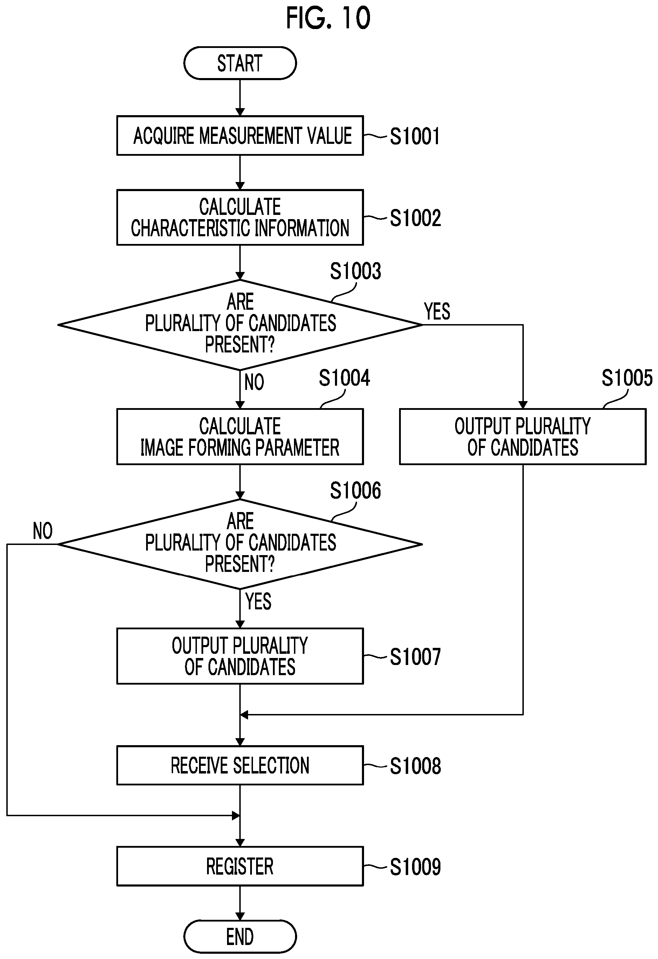

FIG. 10 is a diagram illustrating an example of a flow of processing of registering the medium information in the medium information group.

In FIG. 10, first, the transmission and reception unit 510 (see FIG. 4) of the server apparatus 50 acquires the measurement values measured by the sensor unit 310 (see FIG. 3) from the medium measuring device 30 (step S1001). The characteristic calculation unit 520 calculates the characteristic information of the recording medium using the acquired measurement values (step S1002).

In a case where a plurality of candidates as the characteristic information of the recording medium are present (YES in step S1003), the output control unit 560 outputs the plurality of candidates (step S1005). For example, as illustrated in Example 2 of FIG. 7, in a case where the matching ratios between the calculated characteristic of the recording medium and paper sheet A, paper sheet B, and paper sheet C are similar to each other, the output control unit 560 displays paper sheet A, paper sheet B, and paper sheet C on the result screen 710 (see FIG. 8). In displaying the plurality of candidates, the output control unit 560 displays the image forming parameter in accordance with the characteristic of the recording medium.

In a case where a plurality of candidates as the characteristic information of the recording medium are not present (NO in step S1003), the parameter calculation unit 530 calculates the image forming parameter of the recording medium using the acquired measurement values (step S1004).

In a case where a plurality of candidates as the image forming parameter of the recording medium are present (YES in step S1006), the output control unit 560 outputs the plurality of candidates (step S1007). For example, even in a case where the characteristic of the recording medium is identical, the measurement values may change from the past measurement values because of a factor such as an external environment. The image forming parameter may need to be changed because of a difference in the measurement values. The output control unit 560, for example, outputs the image forming parameter calculated by the parameter calculation unit 530 and the image forming parameter registered in the past for the recording medium of which the characteristic is identical.

After the processing in step S1005 or step S1007, as illustrated in FIG. 8, the medium information is displayed as the plurality of candidates on the display and operation unit 14 (see FIG. 1). The output control unit 560 displays a plurality of pieces of medium information in the measurement result display field 711 (see FIG. 8) and receives selection of the user (step S1008). The user selects the medium information from the measurement result display field 711 and performs printing to be checked. The user selects the medium information to be registered in the medium information group after checking a print result.

The storage control unit 540 registers the selected medium information in the medium information group (step S1009). In a case where the determination button 715 (see FIG. 8) in the result screen 710 is pressed, the storage control unit 540 registers the selected medium information.

In the exemplary embodiments, the processes are performed by any computer. The computer may perform the processes by using a processor serving as hardware, a program serving as software, or combination of these. In this case, the processor is configured to perform the processes in the exemplary embodiments in cooperation with the program and may function as a unit or a means in the exemplary embodiments. The order in which the processor performs the processes is not limited to the described order and may be changed appropriately. The computer may be a general-purpose computer, an application specific computer, a workstation, or another system capable of performing the processes.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit (GPU), or a neural processing unit (NPU). Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiments, the order in which the processor performs the processes is not limited to the order described above and may be changed appropriately. The hardware is composed of electric circuitry in which circuit elements such as semiconductor devices are combined, or the like.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage). The program may be stored in such a divided manner in multiple non-transitory computer readable media present in apparatuses physically away from each other. The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content.

### (Supplementary Note)

(((1))) An information processing system comprising:
   a processor configured to perform:
   in registering a recording medium in a medium information group that is a set of medium information in which a characteristic of the recording medium and image forming control information for controlling image forming on the recording medium are associated with each other,
   a control of acquiring measurement information that is information related to a measured physical property of the recording medium;
   a control of displaying a matching registration candidate based on the acquired measurement information; and
   a control of displaying, in displaying two or more registration candidates, a screen on which test printing of at least one of the two or more registration candidates is executable.
(((2))) The information processing system according to ((1))),
   wherein the registration candidate is a candidate of the characteristic of the recording medium.
(((3))) The information processing system according to (((2))), wherein the processor is configured to perform:
   a control of selecting a matching characteristic of the recording medium based on the measurement information; and
   a control of displaying, in a case where a plurality of matching characteristics of the recording medium are present, the plurality of characteristics of the recording medium as the registration candidates.
(((4))) The information processing system according to (((1))),
   wherein the registration candidate is a candidate of the image forming control information.
(((5))) The information processing system according to (((4))), wherein the processor is configured to perform:
   a control of displaying, in a case where the measurement information is different from past measurement information of the recording medium of which the characteristic is identical, a plurality of candidates of the image forming control information.
(((6))) A registration method comprising:
   in registering a recording medium in a medium information group that is a set of medium information in which a characteristic of the recording medium and image forming control information for controlling image forming on the recording medium are associated with each other,
   acquiring measurement information that is information related to a measured physical property of the recording medium;
   displaying a matching registration candidate based on the acquired measurement information; and
   displaying, in displaying two or more registration candidates, a screen on which test printing of at least one of the two or more registration candidates is executable.

According to (((1))) and (((6))), a function of selecting an appropriate registration candidate in a case where a plurality of registration candidates for the medium information group are present can be provided.

According to (((2))), a function of selecting an appropriate registration candidate in a case where a plurality of registration candidates of the characteristic of the recording medium for the medium information group are present can be provided.

According to (((3))), a function of selecting an appropriate registration candidate even in a case where a plurality of candidates of the characteristic of the recording medium selected based on the measurement information are present can be provided.

According to (((4))), a function of selecting an appropriate registration candidate in a case where a plurality of registration candidates of the image forming control information for the medium information group are present can be provided.

According to (((5))), a function of selecting an appropriate registration candidate even in a case where the characteristic of the recording medium is identical can be provided.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

10: image forming apparatus
30: medium measuring device
50: server apparatus
310: sensor unit
510: transmission and reception unit
520: characteristic calculation unit
521: basis weight conversion unit
522: paper type determination unit
523: coating determination unit
524: paper sheet color determination unit
530: parameter calculation unit
531: transfer adjustment value calculation unit
540: storage control unit
550: specifying unit
560: output control unit

## Claims

1. An information processing system comprising:
a processor configured to perform:
in registering a recording medium in a medium information group that is a set of medium information in which a characteristic of the recording medium and image forming control information for controlling image forming on the recording medium are associated with each other,
a control of acquiring measurement information that is information related to a measured physical property of the recording medium;
a control of displaying a matching registration candidate based on the acquired measurement information; and
a control of displaying, in displaying two or more registration candidates, a screen on which test printing of at least one of the two or more registration candidates is executable.

2. The information processing system according to claim 1,
wherein the registration candidate is a candidate of the characteristic of the recording medium.

3. The information processing system according to claim 2, wherein the processor is configured to perform:
a control of selecting a matching characteristic of the recording medium based on the measurement information; and
a control of displaying, in a case where a plurality of matching characteristics of the recording medium are present, the plurality of characteristics of the recording medium as the registration candidates.

4. The information processing system according to claim 1,
wherein the registration candidate is a candidate of the image forming control information.

5. The information processing system according to claim 4, wherein the processor is configured to perform:
a control of displaying, in a case where the measurement information is different from past measurement information of the recording medium of which the characteristic is identical, a plurality of candidates of the image forming control information.

6. A registration method comprising:
in registering a recording medium in a medium information group that is a set of medium information in which a characteristic of the recording medium and image forming control information for controlling image forming on the recording medium are associated with each other,
acquiring measurement information that is information related to a measured physical property of the recording medium;
displaying a matching registration candidate based on the acquired measurement information; and
displaying, in displaying two or more registration candidates, a screen on which test printing of at least one of the two or more registration candidates is executable.
